# EUROPEAN PATENT APPLICATION

(11) **EP 1 719 646 A1**
(43) Date of publication of application: **08.11.2006**
(21) Application number: 05425286.1
(22) Date of filing: 03.05.2005
(51) Int. Cl.: B60H 1/00

(54) **An air-conditioning system for a motor vehicle, in particular a bus, and a motor vehicle provided with said system**

(71) Applicant: C.R.F. Società Consortile per Azioni, 10043 Orbassano (TO) (IT)
(72) Inventor: Malvicino, Carloandrea, C.R.F. Società C. per Az., 10043 Orbassano (IT); Mola, Stefano c/o C.R.F. Società Con. per Azioni, 10043 Orbassano (IT)
(74) Representative: Cerbaro, Elena

(57) **Abstract**

Air-conditioning system for a motor vehicle provided with at least one heat exchanger (3), which is associated to a fan (7) designed to generate a flow of air inside the motor vehicle, and is connectable selectively to a heating circuit (4,8) designed to supply a heating fluid through the heat exchanger (3), and to a cooling circuit (4,9) designed to supply a cooling fluid through the heat exchanger (3) itself.

## Description

The present invention relates in general to an air-conditioning system for a motor vehicle, and to a motor vehicle provided with said air-conditioning system.

More in particular, the present invention relates to an air-conditioning system for a bus, to which the ensuing description will make explicit reference without this implying any loss of generality.

In the sector of motor vehicles designed for the transport of people, it is known to provide a bus equipped with an air-conditioning system comprising a heating circuit, which is designed to supply a heating fluid to a plurality of first heat exchangers associated to respective first fans designed to generate a flow of hot air inside the bus, and a cooling circuit, which is designed to supply a cooling fluid to a plurality of second heat exchangers associated to respective second fans designed to generate a flow of cold air inside the bus itself.

Generally, the heating circuit extends through an internal-combustion engine of the bus, and is traversed by a fluid for cooling the engine itself. The heating fluid to be supplied to the aforesaid first heat exchangers for heating the bus is obtained, then, by heating the coolant inside the engine of the bus.

The cooling circuit comprises in succession an inlet for the cooling fluid into the cooling circuit itself, a compressor, an oil separator at the delivery of the compressor, a condenser, at least one expansion valve, and at least one outlet for supply of the cooling fluid to the aforesaid second heat exchangers.

The known air-conditioning systems for buses of the type described above present certain drawbacks, which principally derive from the fact that, in said air-conditioning systems, the heating circuit and the cooling circuit each supply a respective plurality of heat exchangers rendering the systems themselves relatively cumbersome and costly.

It is an object of the present invention to provide an air-conditioning system for a motor vehicle designed to eliminate the aforementioned drawbacks.

According to the present invention, there are provided an air-conditioning system for a motor vehicle, as defined in Claim 1, and a motor vehicle, as defined in Claim 11.

The present invention will now be described with reference to the annexed figure, which provides a schematic illustration of a non-limiting embodiment of the invention.

With reference to the annexed figure, number 1 indicates as a whole a bus provided with an air-conditioning system 2 comprising a plurality of heat exchangers 3 of a known type (in the case in point four heat exchangers 3), which are connected in parallel to one another via a supply circuit 4 having an inlet 5 and an outlet 6, and are each associated to a respective fan 7 installed in a position facing the corresponding heat exchanger 3 for generating a flow of air inside the bus 1.

The circuit 4 is designed to be coupled selectively to a heating circuit 8 and a cooling circuit 9 via two valve devices 10, 11 (in the case in point two three-way valves), of which the device 10 is set between the inlet 5 of the circuit 4, an outlet 12 of the circuit 8, and an outlet 13 of the circuit 9, and the device 11 is set between the outlet 6 of the circuit 4, an inlet 14 of the circuit 8, and an inlet 15 of the circuit 9.

The heating circuit 8 comprises a first duct 16, which extends through an internal-combustion engine 17 of the bus 1, is provided with a pump 18 for circulation of a heating fluid defined by a fluid (in the case in point water and glycol) for cooling the engine 17 along the circuit 8 itself, has an outlet 19 connected with the device 10 via a delivery duct 20, and moreover has an inlet 21 connected to the device 11 via a return duct 22. The circuit 8 further comprises a second duct 23, which extends between the outlet 19 and the inlet 21, and is designed to supply part of the coolant through a radiator 24 of a known type of the bus 1 associated to a fan 25.

The cooling circuit 9 comprises a cooling circuit 26, which extends between the inlet 15 and the outlet 13, is traversed by a cooling fluid (in the case in point water and glycol having the same composition as the heating fluid), is provided with a pump 27 for circulation of the cooling along the circuit 26 and with an accumulator 28 of refrigerating power, and extends, moreover, through an evaporator 29 set between the pump 27 and the accumulator 28.

The cooling circuit 9 further comprises a closed-loop refrigerating circuit 30, which is traversed by a refrigerating fluid, and comprises in succession and in order the evaporator 29, a compressor 31 designed to suction the refrigerating fluid in the vapour phase from the evaporator 29, a condenser 32 designed to receive the refrigerating fluid in the vapour phase from the compressor 31, and an expansion valve 33 designed to receive the refrigerating fluid in the liquid phase from the condenser 32 and to supply the refrigerating fluid in the vapour phase to the evaporator 29.

In use, the valve devices 10, 11 are movable between two operating positions for connecting the supply circuit 4 to the heating circuit 8 and, respectively, to the cooling circuit 9 so that the air-conditioning system 2 will function as system for heating the passenger compartment of the bus 1 and, respectively, as system for cooling the passenger compartment of the bus 1.

When the supply circuit 4 is connected to the heating circuit 8, the circuits 4 and 8 are traversed by a vector fluid defined, in steady-state running conditions, by the aforesaid heating fluid, which is supplied by the pump 18 through the engine 17, is heated inside the engine 17, and is supplied in part to the radiator 24 to be cooled by the fan 25 and in part in the first place along the delivery duct 20 and to the inlet 5 of the circuit 4, then through the heat exchangers 3 to enable the fans 7 to supply a flow of hot air inside the bus 1, and finally to the outlet 6 and along the return duct 22.

When the supply circuit 4 is connected to the cooling circuit 9, the circuits 4 and 26 are traversed by a vector fluid defined, in steady-state running conditions, by the aforesaid cooling fluid, which is supplied by the pump 27 through the evaporator 29, is cooled inside the evaporator 29 via the refrigerating fluid contained in the circuit 30, and is supplied, in the first place, to the inlet 5 of the circuit 4, then through the heat exchangers 3 to enable the fans 7 to supply a flow of cold air inside the bus 1, and finally to the outlet 6 of the circuit 4 itself.

The conformation of the air-conditioning system 2 presents certain advantages principally deriving from the fact that:
- the refrigerating fluid is contained only in the circuit 30 and is not to be supplied to the heat exchangers 3;
- the length of the circuit 30 is relatively small and enables a considerable reduction in the leakage of refrigerating fluid and the amount of refrigerating fluid used;
- the heat exchangers 3 and the supply circuit 4 are used both to integrate the heating circuit 8 and hence enable heating of the passenger compartment of the bus 1, and to integrate the cooling circuit 9 and hence enable cooling of the passenger compartment of the bus 1 itself;
- the heat exchangers 3 may always undergo sanitation treatment by simply connecting the supply circuit 4 to the heating circuit 8 and then supplying a hot fluid through the heat exchangers 3 themselves;
- the presence of two circuits separate from one another, namely, the circuits 26 and 30, enables replacement of just the circuit 30 in the case where it were to prove necessary to change type of refrigerating fluid; and
- the relatively high amount of cooling fluid present in the circuit 26 enables use of the accumulator 28 and hence a correct operation of the air-conditioning system 2 when the engine 17 is turned off.

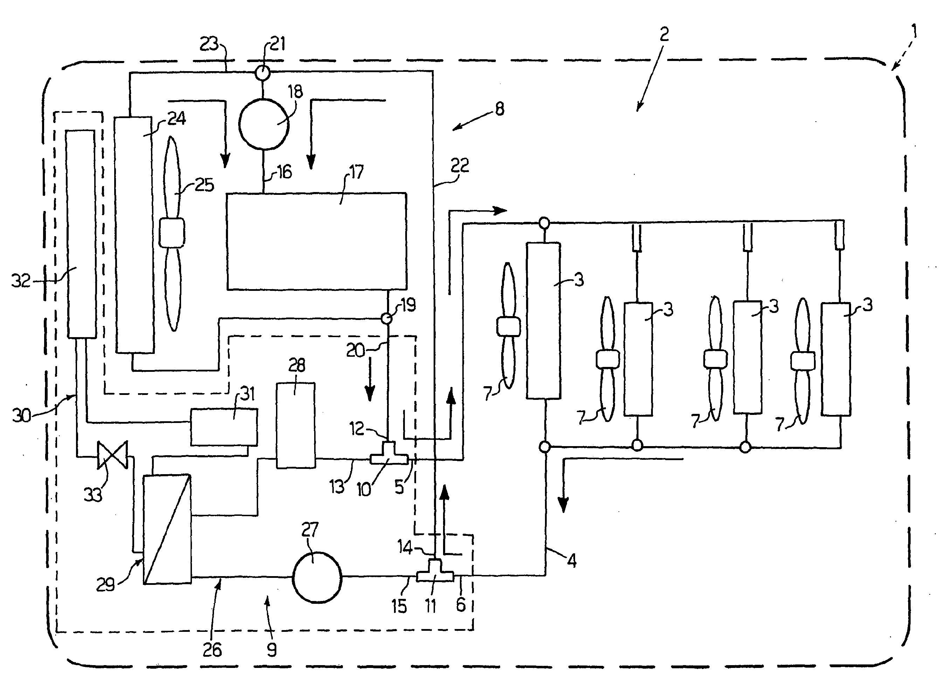

## Claims

1. An air-conditioning system for a motor vehicle, the system comprising: heat-exchanging means (3, 4); fan means (7) associated to said heat-exchanging means (3, 4) for generating a flow of air inside the motor vehicle; and a heating circuit (8) for supplying a heating fluid through said heat-exchanging means (3, 4), the heating circuit (8) extending through an internal-combustion engine (17) of the motor vehicle; and the system being **characterized in that** it comprises a cooling circuit (9) for supplying a cooling fluid through said heat-exchanging means (3, 4); valve means (10, 11) being provided for controlling selectively the supply of said heating and cooling fluids through said heat-exchanging means (3, 4).

2. The air-conditioning system according to Claim 1, in which said heat-exchanging means (4, 7) comprise a heat exchanger (3) and a supply circuit (4) for supplying said heating and cooling fluids through said heat exchanger (3); the valve means (10, 11) being set between said heating, cooling and supply circuits (8, 9, 4) for selectively connecting the supply circuit (4) with said heating and cooling circuits (8, 9).

3. The air-conditioning system according to Claim 2, in which each said heating, cooling and supply circuits (8, 9, 4) comprises an inlet (14, 15, 5) and an outlet (12, 13, 6) of the corresponding said heating and cooling fluids into, and respectively out of, the circuit (8, 9, 4) itself; the valve means (10, 11) comprising a first valve device (10) for selectively connecting the inlet (5) of the supply circuit (4) to the outlet (12) of the heating circuit (8) and to the outlet (13) of the cooling circuit (9) and a second valve device (11) for selectively connecting the outlet (6) of the supply circuit (4) to the inlet (14) of the heating circuit (8) and to the inlet (15) of the cooling circuit (9).

4. The air-conditioning system according to any one of the preceding claims, in which the heating fluid and the cooling fluid coincide with one another.

5. The air-conditioning system according to any one of the preceding claims, in which the cooling circuit (9) comprises: a cooling circuit (26) traversed by said cooling fluid; a refrigerating circuit (30) traversed by a refrigerating fluid for cooling of said cooling fluid, and a further heat exchanger (29) traversed by said cooling and refrigerating circuits (26, 30) for cooling the cooling fluid via the refrigerating fluid.

6. The air-conditioning system according to any one of the preceding claims, in which the cooling circuit (9) comprises a refrigerating-power accumulator (28) for guaranteeing a correct operation of the cooling circuit (9) itself when the internal-combustion engine (17) of the motor vehicle is turned off.

7. The air-conditioning system according to Claim 5, in which the cooling circuit (26) comprises a refrigerating-power accumulator (28) for guaranteeing a correct operation of the cooling circuit (9) itself when the internal-combustion engine (17) of the motor vehicle is turned off.

8. The air-conditioning system according to any one of the preceding claims, in which the cooling circuit (9) comprises a compressor (31), a condenser (32), and an expansion valve (33).

9. The air-conditioning system according to Claim 5, in which the refrigerating circuit (30) comprises a compressor (31), a condenser (32), and an expansion valve (33) arranged in succession and in order along the cooling circuit (30) itself.

10. A motor vehicle comprising an air-conditioning system according to any one of the preceding claims.

11. The motor vehicle according to Claim 10, in which the motor vehicle is a bus.
